# EUROPÄISCHE PATENTSCHRIFT

(11) **EP 1 213 513 B1**
(45) Veröffentlichungstag und Bekanntmachung des Hinweises auf die Patenterteilung: **07.01.2004**
(21) Anmeldenummer: 01127931.2
(22) Anmeldetag: 23.11.2001
(51) Int. Cl.: F16H 63/32

(54) **Schaltvorrichtung für Geschwindigkeits-Wechselgetriebe**
Shift device for a gearbox
Dispositif de commande de changements de rapports pour boîtes de vitesses

(30) Priorität: 08.12.2000 DE 10061076
(43) Veröffentlichungstag der Anmeldung: 12.06.2002
(73) Patentinhaber: AUDI AG, 85045 Ingolstadt (DE)
(72) Erfinder: Suchandt, Thomas, 85051 Ingolstadt (DE); Ismail, Akin, 85057 Ingolstadt (DE)
(74) Vertreter: Le Vrang, Klaus

(56) Entgegenhaltungen:
- EP-A- 0 332 442
- EP-A- 0 721 075
- EP-A- 0 942 203
- EP-A- 1 079 154
- DE-A- 19 908 570
- JP-A- 8 247 285
- JP-A- 10 220 577
- US-A- 4 279 175

## Beschreibung

Die Erfindung betrifft eine Schaltvorrichtung für Geschwindigkeits-Wechselgetriebe in Kraftfahrzeugen.

EP-A-1 079 154 (veröffentlicht am 28.02. 2001 und zitiert nach Art. 54(3) EPÜ) zeigt eine Schaltvorrichtung für Geschwindigkeits-Wechselgetriebe in Kraftfahrzeugen, mit zumindest einer im Getriebegehäuse verschiebbar und/oder drehbar geführten Schaltstange, auf der über einen Nabenabschnitt ein Schaltelement zur Schaltbetätigung der Getriebeelemente angeordnet ist, wobei der Nabenabschnitt eine maulförmige Ausnehmung aufweist und mit dieser Ausnehmung auf die Schaltstange quer zu ihrer Längsachse. aufgesteckt und mittels eines Pass-Stiftes gehalten ist, der in dem Nabenabschnitt und in der Schaltstange mit Gleitsitz aufgenommen ist.

Die maulförmige Ausnehmung kann zum Beispiel in den Nabenabschnitt fertigungstechnisch einfach eingefräst werden. Durch das einfache Aufstecken des Schaltelementes quer zur Längsachse der Schaltstange kann diese einfach und gegebenenfalls sogar bei bereits im Getriebegehäuse eingebauter Schaltstange montiert werden. Ferner wird durch die maulförmige Ausbildung der Ausnehmung gegebenenfalls eine begrenzte. Beweglichkeit des Schaltelementes ermöglicht, was hinsichtlich geringer Toleranzausgleiche im Getriebe und zur Aufnahme von Schwingungs- oder Taumelbewegungen von rotierenden Getriebeelementen von Vorteil sein kann. Letzteres gilt insbesondere für die Ausbildung des Schaltelementes als Schaltgabel, die in bekannter Weise die Schaltmuffe einer Schaltkupplung oder Synchronkupplung des Schaltgetriebes umfasst und betätigt.

Aufgabe der Erfindung ist es, eine Schaltvorrichtung für Geschwindigkeits-Wechselgetriebe gemäß der in EP-A-1 079 154 angegebenen Art vorzuschlagen, die fertigungstechnisch und hinsichtlich der Montage einfacher ist und eine sichere Verbindung von Schaltstange und Schaltelement ermöglicht.

Diese Aufgabe wird erfindungsgemäß mit den Merkmalen des Anspruches 1 gelöst.

Vorteilhafte und zweckmäßige Weiterbildungen der Erfindung bilden die Gegenstände der Unteransprüche.

Erfindungsgemäß wird vorgeschlagen, dass der Pass-Stift mittels eines Sicherungselementes an der Schaltstange oder an dem Nabenabschnitt gehalten ist.

Hierbei ist das Schaltelement, insbesondere eine Schaltgabel, mittels eines Pass-Stiftes gehalten, wobei diese um den Pass-Stift begrenzt verdrehbar, in axialer Richtung der Schaltstange aber spielfrei verschiebbar ist.

Die Schaltstange kann vorteilhaft rotationssymmetrisch als Rundstab oder Rohr ausgebildet sein und zumindest eine Schlüsselfläche besitzen, die mit einer korrespondierenden Führungsfläche des Schaltelementes zusammenwirkt. Die Schlüsselfläche kann entweder eingefräst oder bei einer rohrförmigen Schaltstange spanlos eingeformt sein.

Ein Ausführungsbeispiel der Erfindung ist im Folgenden mit weiteren Einzelheiten näher erläutert. Die schematische Zeichnung zeigt in
- Figur 1: schematisch einen Längsschnitt durch ein Geschwindigkeits-Wechselgetriebe bzw. Schaltgetriebe für ein Kraftfahrzeug, mit einer Schaltstange und einer daran angeordneten Schaltgabel;
- Figur 2: einen Querschnitt gemäß Linie II - II der Figur 3 durch die Schaltstange und die Schaltgabel; und
- Figur 3: einen Längsschnitt durch einen Abschnitt der Schaltstange entlang der Linie III - III der Figur 2 mit dem Nabenabschnitt der Schaltgabel.

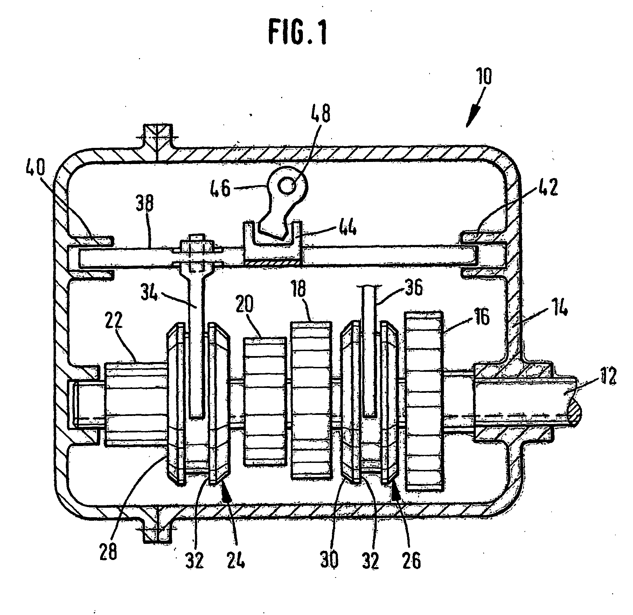

In der Figur 1 ist mit 10 ein Geschwindigkeits-Wechselgetriebe bzw. Schaltgetriebe für Kraftfahrzeuge bezeichnet, mit einer nicht dargestellten Antriebswelle und einer Abtriebswelle 12, die im Getriebegehäuse 14 in bekannter Weise drehbar gelagert sind. Die Abtriebswelle 12 (und die nicht dargestellte Antriebswelle) tragen Zahnradpaare, die definierte Antriebsübersetzungen (Gänge) ergeben.

Dabei sind auf der Abtriebswelle 12 vier schaltbare Gang-Zahnräder 16, 18, 20, 22 angeordnet, die über die beiden Schaltkupplungen 24, 26 mittels deren Schaltmuffen 28, 30 mit der Abtriebswelle 12 kuppelbar sind.

Dazu greifen in ringförmige Nuten 32 der Schaltmuffen 28, 30 die Arme von Schaltgabeln 34, 36 ein, wobei die Schaltgabel 34 an einer Schaltstange 38 in noch zu beschreibender Weise angeordnet ist. Die nur teilweise dargestellte Schaltgabel 36 wirkt mit einer weiteren, nicht ersichtlichen Schaltstange in gleicher Weise zusammen.

Die über die Lagerstellen 40, 42 im Getriebegehäuse 14 axial verschiebbar aufgenommene Schaltstange 38 weist ein Kulissenteil 44 auf, in das der Schaltfinger 46 einer Schaltwelle 48 eingreift. Die Schaltwelle 48 ist in bekannter Weise sowohl verdrehbar als auch axial verschiebbar im Getriebegehäuse 14 gelagert und kann alternativ mit dem Kulissenteil 44 oder einem korrespondierenden, nicht dargestellten Kulissenteil der anderen Schaltstange in Eingriff gebracht werden, so dass wahlweise die Schaltgabel 34 oder die Schaltgabel 36 zum Schalten von Gängen entsprechend betätigt werden kann.

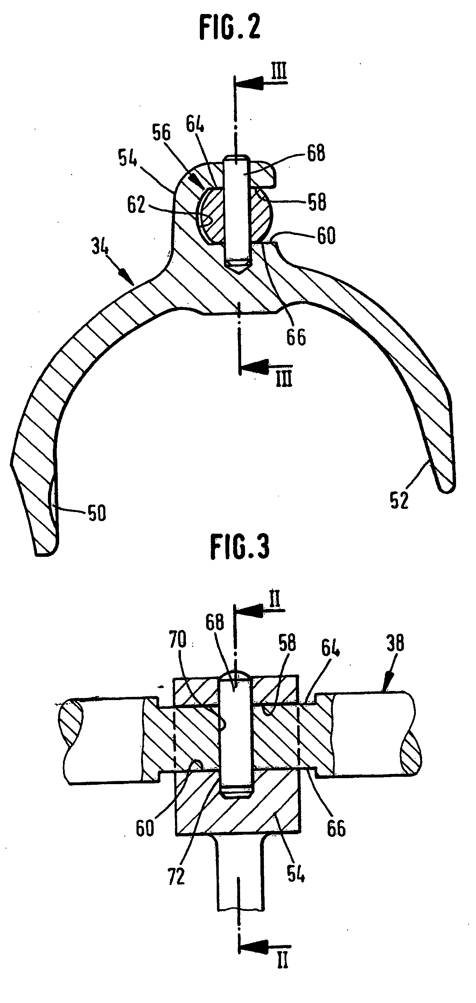

Die Schaltgabel 34 (vgl. Figuren 2 und 3) setzt sich aus den Armen 50, 52 und dem Nabenabschnitt 54 zusammen.

Im Nabenabschnitt 54 ist eine maulförmige oder U-förmige Ausnehmung 56 eingefräst, die von zwei zueinander parallelen Führungsflächen 58, 60 und einer Grundfläche 62 begrenzt ist.

Die Führungsflächen 58, 60 der Ausnehmung 54 korrespondieren mit Schlüsselflächen 64, 66, die in die ansonsten rotationssymmetrische, aus einem Rundstab gefertigte, Schaltstange 38 eingearbeitet sind.

Schließlich durchdringt ein Pass-Stift 68 korrespondierende Bohrungen 70, 72 in der Schaltstange 38 und dem Nabenabschnitt 54.

Der Pass-Stift 68 ist mit Gleitsitz in der Schaltstange 38 und dem Nabenabschnitt 54 angeordnet und mittels eines nicht dargestellten Sicherungselementes gehalten. Daraus resultiert eine einfache Montage des Pass-Stiftes ohne erforderliche Einpresskräfte. Das Sicherungselement kann eine federnde Klammer sein, die mit der Schaltstange 38 oder dem Nabenabschnitt 54 clipsartig verrastet und den Pass-Stift 68 gegen Herausgleiten aus den Bohrungen 70 sichert.

Die Schaltgabel 34 kann sich um einige Winkelgrade um die Mittelachse des Pass-Stiftes 68 und relativ zur Schaltstange 38 verdrehen.

Durch diese Verdrehbarkeit können geringfügige Schwingungen oder Taumelbewegungen der Schaltmuffen 28, 30 der Schaltkupplungen 24, 26 ohne unzulässigem

Verschleiß aufgenommen werden. Es versteht sich, dass dazu die Bohrungen 70, 72 in der Schaltstange 38 und in dem Nabenabschnitt 54 senkrecht zu den Führungsflächen 58, 60 bzw. den Schlüsselflächen 64, 66 auszurichten sind.

Zur Montage der Schaltgabeln 34, 36 werden diese von der offenen Seite der Ausnehmung 56 quer zur Längsmittelachse der Schaltstangen 38 auf die Schlüsselflächen 64, 66 aufgesteckt und dann die Pass-Stifte 68 eingedrückt.

Die Erfindung ist nicht auf das beschriebene Ausführungsbeispiel beschränkt. Anstelle aus einem Rundstab kann die Schaltstange 38 auch rohrförmig mit entsprechend eingeformten Schlüsselflächen 64, 66 ausgeführt sein. Sofern an die Führungsfunktion der Schaltgabel geringere Anforderungen gestellt sind, kann die beschriebene Verbindung über den Pass-Stift 68 sogar ohne Schlüsselflächen 64, 66 an der Schaltstange 38 bewerkstelligt sein. Obwohl ein rotationssymmetrischer Querschnitt der Schaltstange 38 fertigungstechnisch vorteilhaft ist, könnte gegebenenfalls auch ein anderer Querschnitt, zum Beispiel rechteckförmig, angewendet sein.

Anstelle oder zusätzlich zu der beschriebenen Verbindung an der Schaltgabel 34, 36 könnte auch der Schaltfinger 46 und/oder das Kulissenteil 44 auf der Schaltwelle 48 bzw. der Schaltstange 38 wie vorbeschrieben angeordnet sein.

### BEZUGSZEICHENLISTE

- 10: Geschwindiketis-Wechselgetriebe / Schaltgetriebe
- 12: Abtriebswelle
- 14: Getriebegehäuse
- 16: Gang-Zahnrad
- 18: Gang-Zahnrad
- 20: Gang-Zahnrad
- 22: Gang-Zahnrad
- 24: Schaltkupplung
- 26: Schaltkupplung
- 28: Schaltmuffe
- 30: Schaltmuffe
- 32: Nuten
- 34: Schaltgabel
- 36: Schaltgabel
- 38: Schaltstange
- 40: Lagerstelle
- 42: Lagerstelle
- 44: Kulissenteil
- 46: Schaltfinger
- 48: Schaltwelle
- 50: Arm
- 52: Arm
- 54: Nabenabschnitt
- 56: Ausnehmung
- 58: Führungsfläche
- 60: Führungsfläche
- 62: Grundfläche
- 64: Schlüsselfläche
- 66: Schlüsselfläche
- 68: Pass-Stift
- 70: Bohrung
- 72: Bohrung

## Patentansprüche

1. Schaltvorrichtung für Geschwindigkeits-Wechselgetriebe (10) in Kraftfahrzeugen, mit zumindest einer im Getriebegehäuse (14) verschiebbar und/oder drehbar geführten Schaltstange (38), auf der über einen Nabenabschnitt (54) ein Schaltelement (34, 36) zur Schaltbetätigung der Getriebeelemente (16 bis 22, 28, 30) angeordnet ist, wobei der Nabenabschnitt (54) eine maulförmige Ausnehmung (56) aufweist und mit dieser Ausnehmung (56) auf die Schaltstange (38) quer zu ihrer Längsachse. aufgesteckt und mittels eines Pass-Stiftes (68) gehalten ist, der in dem Nabenabschnitt (54) und in der Schaltstange (38) mit Gleitsitz aufgenommen ist, und wobei der Pass-Stift (68) mittels eines Sicherungselementes an der Schaltstange (38) oder an dem Nabenabschnitt (54) gehalten ist.

2. Schaltvorrichtung nach Anspruch 1, **dadurch gekennzeichnet, dass** die Schaltstange (38) rotationssymmetrisch ausgebildet ist und zumindest eine mit der maulförmigen Ausnehmung (56) zusammenwirkende Schlüsselfläche (64, 66) besitzt.

3. Schaltvorrichtung nach Anspruch 2, **dadurch gekennzeichnet, dass** in die Schaltstange (38) zwei diametral gegenüberliegende, im wesentlichen parallele Schlüsselflächen (64, 66) eingearbeitet sind, die mit korrespondierenden Führungsflächen (58, 60) der maulförmigen Ausnehmung (56) zusammenwirken.

4. Schaltvorrichtung nach einem der Ansprüche 1 bis 3, **dadurch gekennzeichnet, dass** das stiftförmige Halteelement (68) senkrecht zu den Schlüsselflächen (64, 66) sich durch den Nabenabschnitt (54) und die Schaltgabel (38) erstreckt.

5. Schaltvorrichtung nach einem der vorangehenden Ansprüchen, **dadurch gekennzeichnet, dass** das Schaltelement eine Schaltgabel (34, 36) zur Betätigung einer Schaltmuffe (28, 30) einer Schaltkupplung (24, 26)'ist und dass die Schaltgabel (34, 36) um eine senkrecht zur Längsachse der Schaltstange (38) definierte Drehachse, die der Mittelachse des Pass-Stiftes (68) entspricht, begrenzt verdrehbar gehalten ist.

6. Schaltvorrichtung nach Anspruch 5, **dadurch gekennzeichnet, dass** die Schaltgabel (34, 36) um die Mittelachse des stiftförmigen Halteelementes (68) begrenzt verdrehbar gehalten ist.

## Claims

1. Gearshift device for a gearbox (10) in vehicles, with at least one gearshift bar (38) that can shift in the gear housing (14) and/or that is guided such that it can rotate, on which a gearshift element (34, 36) for gearshift operation of the gearing elements (16 to 22, 28, 30) is disposed by means of a hub section (54), whereby the hub section (54) has a jaw-shaped recess (56) and, with this recess (56), is held, by means of a fitting pin (68), on the gearshift bar (38) transversely in relation to the latter's longitudinal axis, the said fitting pin (68) being taken up, with a sliding fit, into the hub section (54) and into the gearshift bar (38), and whereby the fitting pin (68) is held on the gearshift bar (38) or on the hub section (54) by means of a securing element.

2. Gearshift device in accordance with claim 1, **characterized in that** the gearshift bar (38) is rotationally symmetrical and has at least one key face (64, 66) functioning in conjunction with the jaw-shaped recess (56).

3. Gearshift device in accordance with claim 2, **characterized in that** two diametrically opposite, and essentially parallel, key faces (64, 66), functioning in conjunction with corresponding guide surfaces (58, 60) of the jaw-shaped recess (56), are worked into the gearshift bar (38).

4. Gearshift device in accordance with one of claims 1 to 3, **characterized in that** the pin-form holding element (68) extends vertically in relation to the key faces (64, 66), running through the hub section (54) and the gearshift bar (38).

5. Gearshift device in accordance with one of the preceding claims, **characterized in that** the gearshift element is a shift fork (34, 36) for operating a gearshift sleeve (28, 30) of a clutch (24, 26) and **in that** the shift fork (34, 36) is held such that it can rotate to a limited extent around an axis of rotation that is vertical in relation to the longitudinal axis of the gearshift bar (38), the said longitudinal axis corresponding to the central axis of the fitting pin (68).

6. Gearshift device in accordance with claim 5, **characterized in that** the shift fork (34, 36) is held such that it can rotate to a limited extent around the central axis of the pin-form holding element (68).

## Revendications

1. Dispositif de commande de changement de rapport pour des boîtes de vitesses à rapports séparés (10) dans des véhicules automobiles, avec au moins une tige de manoeuvre (38), guidée de façon déplaçable et/ou de façon à pouvoir tourner dans le carter de boîte de vitesses (14), sur laquelle est disposé, par l'intermédiaire d'un tronçon formant moyeu (54), un élément de manoeuvre (34, 36) pour l'actionnement de changement de vitesse de l'élément de boîte de vitesses (16 à 22, 28, 30), le tronçon formant moyeu (54) présentant une ouverture (56) en forme de bec et étant enfiché, avec cet évidement (56), sur la tige de manoeuvre (38), transversalement par rapport à son axe longitudinal, et maintenu au moyen d'une goupille ajustée, logée, avec un montage glissant, dans le tronçon formant moyeu (54) et dans la tige de manoeuvre (38), la goupille ajustée (68) étant maintenue sur la tige de manoeuvre (38) ou sur le tronçon formant moyeu (54), à l'aide d'un élément de sécurité.

2. Dispositif de commande de changement de rapport selon la revendication 1, **caractérisé en ce que** la tige de manoeuvre (38) est d'une forme répondant à une symétrie de rotation et comporte au moins une surface en clé (64, 66) coopérant avec l'évidement (56) en forme de bec.

3. Dispositif de commande de changement de rapport selon la revendication 2, **caractérisé en ce que**, dans la tige de manoeuvre (38), sont creusées par usinage deux surfaces en clé(64, 66) sensiblement parallèles, diamétralement opposées, coopérant avec des faces de guidage (58, 60) correspondantes de l'évidement (56) en forme de bec.

4. Dispositif de commande de changement de rapport selon l'une des revendications 1 à 3, **caractérisé en ce que** l'élément de maintien (68) en forme de tige s'étend perpendiculairement par rapport aux surfaces en clé (64, 66), à travers le tronçon formant moyeu (54) et la fourche de manoeuvre (38).

5. Dispositif de commande de changement de rapport selon l'une des revendications précédentes, **caractérisé en ce que** l'élément de manoeuvre est une fourche de manoeuvre (34, 36) pour l'actionnement d'un manchon de manoeuvre (28, 30) d'un embrayage de manoeuvre (24, 26), et **en ce que** la fourche de manoeuvre (34, 36) est maintenue de façon à pouvoir tourner de façon limitée autour d'un axe de rotation, défini perpendiculairement à l'axe longitudinal de la tige de manoeuvre (38), axe de rotation correspondant à l'axe médian de la goupille ajustée (68).

6. Dispositif de commande de changement de rapport selon la revendication 5, **caractérisé en ce que** la fourche de manoeuvre (34, 36) est maintenue de façon à pouvoir tourner de façon limitée autour de l'axe médian de l'élément de maintien (68) en forme de tige.
